# EUROPEAN PATENT SPECIFICATION

(11) **EP 0 578 483 B1**
(45) Date of publication and mention of the grant of the patent: **14.05.1997**
(21) Application number: 93305312.6
(22) Date of filing: 06.07.1993
(51) Int. Cl.: G01P 3/44

(54) **Bearings**
Lager für mit Drehzahlsensoren ausgerüstete Räder
Palier pour roues munies de capteurs de vitesse de rotation

(30) Priority: 09.07.1992 GB 9214639
(43) Date of publication of application: 12.01.1994
(73) Proprietor: THE TIMKEN COMPANY, Canton, Ohio 44706 (US)
(72) Inventor: Driver, Richard Charles, Kettering, Northamptonshire (GB)
(74) Representative: Perkins, Sarah

(56) References cited:
- EP-A- 0 306 850
- EP-A- 0 420 041
- EP-A- 0 424 185
- US-A- 3 939 373
- US-A- 4 795 278

## Description

This invention relates to bearings and is more particularly concerned with wheel bearings for motor vehicles equipped with anti-lock braking systems. The present systems of this kind require the provision of an excitor ring on each wheel or more usually on a component which rotates with the wheel. In arrangements according to this invention, a bearing is provided for the mounting of the excitor ring.

In EP-A-0306850 the wheel hub of a vehicle encasing a roller bearing arrangement is described in which on one side of the outer flange of the hub a tapered end for a wheel cap is provided and on the opposing side of the flange a tapered end for a magnetic wheel or sensor is provided.

According to this invention there is provided a wheel bearing for a motor vehicle comprising radially inner and outer race rings and bearing elements in rolling engagement with raceways in said race rings, the outer race ring having a flange which is directed radially outwardly characterised in that the outer race ring further includes on its radially outer surface two mounting positions at axially spaced locations each providing axial and radial location for an excitor ring, both of the mounting positions being located on the same side of the flange.

In some constructions according to the invention the outer race ring may be in the form of an annular outer element and an annular inner element which is a press fit in the outer element and which provides the radially inwardly facing raceway or raceways, the two said cylindrical surfaces and location shoulders being formed on said outer element.

In a preferred arrangement according to the invention, the outer race ring has an outwardly projecting flange which is adapted to receive studs or bolts projecting axially from one axial face thereof, said shoulders facing in the opposite axial direction to said axial face. Where the outer race ring comprises outer and inner elements, the flange is formed on the outer element.

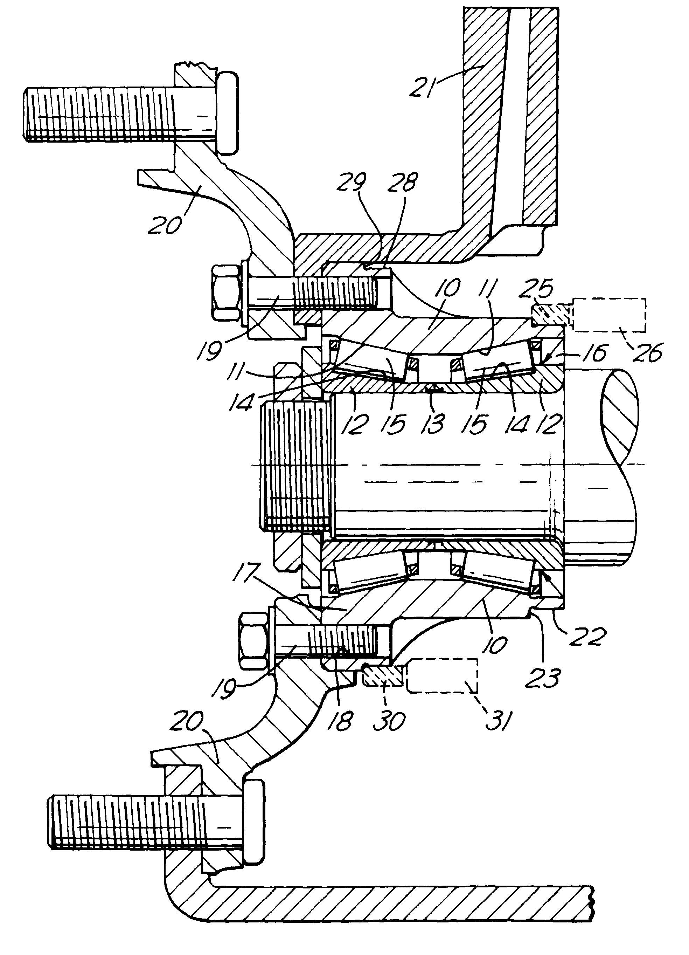

One embodiment of the invention will now be described by way of example with reference to the accompanying drawing showing in compound axial section a bearing according to the invention with excitor rings mounted in the two alternative positions above and below the axis of the bearing respectively.

Referring to the drawing there is shown a wheel bearing for a motor vehicle equipped with an anti-lock braking system. The bearing is a two-row tapered roller bearing comprising an outer race ring 10 with raceways 11 inclined away from each other, two inner race rings 12 held in abutment with each other by a clip 13 and having raceways 14 inclined towards each other, and two rows of tapered rollers 15 engaged in the raceways 11 and 14. A seal 16 is provided at at least one end of the bearing.

The outer race ring is axially thickened at one axial end to form a flange 17 in which threaded holes 18 are machined to receive studs or bolts 19 for the attachment of an annular wheel carrier 20 and brake disc 21 as shown in the upper half of the drawing, or a wheel carrier 20 and brake drum 24 as shown in the lower half of the drawing. The two inner race rings 12 are held in abutment with an annular shoulder on a non-rotating stub shaft, about which the outer race ring and its attachments rotate.

The outer race ring has at its end having the smaller outer diameter a cylindrical surface 22 and an axial shoulder 23 at the end of the surface further from that end. As shown in the upper half of the drawing an excitor ring 25, which may be of any convenient form, can be mounted on the surface 22 and located by the shoulder 23 for co-operation with a sensor 26 which is responsive to the rotational speed of the excitor ring 25, and which produces an electrical signal indicative of the angular velocity of the ring 25.

Adjacent its larger end the outer race ring has a cylindrical surface 28 and an axial shoulder 29 for location of an excitor ring 30 in this alternative position as shown in the lower half of the drawing. In use a sensor 31 co-operates with the excitor ring 30 to produce an electrical signal indicative of the angular velocity of the ring 30. This arrangement is intended for use with drum brakes.

Thus an excitor ring can be mounted at either position on the outer race ring according to availability of space. There is a requirement to fit disc brakes instead of drum brakes for certain applications where braking efficiency is particularly critical. Space limitations do not permit the excitor ring to be mounted in the same position for both disc and drum brake arrangements, and the illustrated arrangement avoids the need to employ two different bearings.

## Claims

1. A wheel bearing for a motor vehicle comprising radially inner (12) and outer (10) race rings and bearing elements (15) in rolling engagement with raceways in said race rings, the outer race ring (10) having a flange (17) which is directed radially outwardly characterised in that the outer race ring (10) further includes on its radially outer surface two mounting positions (22, 28) at axially spaced locations each providing axial and radial location for an excitor ring (25, 30), both of the mounting positions (22, 28) being located on the same side of the flange (17).

2. A wheel bearing as claimed in claim 1, wherein each of said mounting positions comprises a cylindrical surface (22, 28) with an axially facing location shoulder (23, 29) at one axial end of the cylindrical surface, the two shoulders (23, 29) facing in the same axial direction.

3. A wheel bearing as claimed in claim 2, wherein the flange (17) is adapted to receive studs or bolts (19) projecting axially from one face thereof and with said shoulders (23, 29) facing in the opposite direction to said axial face.

4. A wheel bearing as claimed in either of claims 2 or 3, wherein the outer race ring (10) is in the form of an annular outer element and an annular inner element which is a press fit in the outer element and which provides a radially inwardly facing raceway or raceways, the two cylindrical surfaces (22, 28) and location shoulders (23, 29) being formed on the outer element.

5. A wheel bearing as claimed in claim 4, wherein the flange (17) is formed on the outer element.

6. A wheel bearing as claimed in any one of the preceding claims, wherein the bearing is a two-row tapered roller bearing.

7. A wheel bearing as claimed in any one of claims 2 to 6, wherein one of the shoulder locations is on the flange (17).

8. A wheel bearing as claimed in any one of claims 2 to 7, wherein the two cylindrical surfaces (22, 28) are of different diameters.

9. A wheel bearing as claimed in any one of the preceding claims further including an excitor ring mounted on one of the mounting positions.

## Patentansprüche

1. Ein Radlager für ein Motorfahrzeug, das radiale innere (12) und äußere (10) Laufringe und Lagerelemente (15) aufweist, die in rollendem Eingriff mit Laufrillen in den besagten Laufringen stehen, wobei der äußere Laufring (10) einen Flansch (17)aufweist, der radial nach außen gerichtet ist, dadurch gekennzeichnet, daß der äußere Laufring (10) außerdem auf seiner radialen Außenfläche zwei Montagepositionen (22, 28)an Stellen mit axialem Zwischenraum einbezieht, die jeweils axiale und radiale Aufnahme für einen Erregerring (25, 30) bereitstellen, wobei sich beide Montage-positionen (22, 28) auf derselben Seite des Flansches (17) befinden.

2. Ein Radlager wie in Anspruch 1 beansprucht, worin jede der besagten Montagepositionen eine zylindrische Fläche (22, 28) mit einer in Achsrichtung zeigenden Aufnahmeschulter (23, 29) an einem axialen Ende der zylindrischen Fläche aufweist, wobei beide Schultern (23, 29)in dieselbe axiale Richtung zeigen.

3. Ein Radlager wie in Anspruch 2 beansprucht, worin der Flansch (17) angepaßt ist Stehbolzen oder Bolzen (19) aufzunehmen, die axial aus einer dessen Fläche herausragen und wobei die besagten Schultern (23, 29) in die entgegengesetzte Richtung zur besagten axialen Fläche zeigen.

4. Ein Radlager wie in beiden der Ansprüche 2 oder 3 beansprucht, worin der äußere Laufring (10)in der Form eines ringförmigen äußeren Elements und eines ringförmiges inneres Elements ist, das eine Preßpassung in das äußere Element ist, und welches eine nach innen gerichtete Laufrille oder Laufrillen bereitstellt und wobei die zwei zylindrischen Flächen (22, 28) und die Aufnahmeschultern (23, 29) auf dem äußeren Element geformt sind.

5. Ein Radlager wie in Anspruch 4 beansprucht, worin der Flansch (17) auf dem äußeren Element geformt ist.

6. Ein Radlager wie in einem beliebigen der vorherigen Ansprüche beansprucht, worin das Lager ein zweireihiges Kegelrollenlager ist.

7. Ein Radlager wie in einem beliebigen der Ansprüche 2 bis 6 beansprucht, worin sich eine der Schulterstellen auf dem Flansch (17) befindet.

8. Ein Radlager wie in einem beliebigen der Ansprüche 2 bis 7 beansprucht, worin die zwei zylindrischen Flächen (22, 28) unterschiedlichen Durchmessers sind.

9. Ein Radlager wie in einem beliebigen der vorherigen Ansprüche beansprucht, das außerdem einen Erregerring einbezieht, der an einer der Montagepositionen montiert ist.

## Revendications

1. Un palier pour roue de véhicule motorisé comprenant des bagues de roulement radiales internes (12) et externes (10) et des éléments de roulement (15) en position de prise roulante avec les voies de roulement situées à l'intérieur desdites bagues de roulement, la bague de roulement externe (10) comportant une bride (17) orientée de manière radiale et vers l'extérieur, caractérisé par le fait que la bague externe (10) comprend en outre sur sa surface radiale externe deux emplacements de montage (22,28) situés à des endroits séparés l'un de l'autre dans l'axe, chacun de ces emplacements offrant une position axiale et radiale pour recevoir une bague excitatrice (25,30), les deux emplacements étant situés sur la même surface de la bride (17).

2. Un palier pour roue ainsi revendiqué dans la revendication 1, dans lequel chacun des emplacements de montage comprend une surface cylindrique (22,28) munie d'un épaulement de positionnement (23,29) orienté selon le même axe et étant situé à l'une des extrémités axiales de la surface cylindrique, les deux épaulements (23,29) étant orientés selon la même direction axiale.

3. Un palier pour roue ainsi revendiqué dans la revendication 2, dans lequel la bride (17) est conçue pour recevoir des boulons ou des goujons (19) formant une projection dans l'axe depuis une surface de la bride, lesdits épaulements (23,29) étant orientés dans la direction opposée à celle de ladite surface axiale.

4. Un palier pour roue ainsi revendiqué dans la revendication 2 ou dans la revendication 3, dans lequel la bague de roulement externe (10) se présente sous la forme d'un élément annulaire externe et d'un élément annulaire interne qui compose un ajustement à la presse dans l'élément externe et qui forme une ou plusieurs voies de roulement orientées de manière radiale et vers l'intérieur, les deux surfaces cylindriques (22,28) et les deux épaulements de positionnement (23,29) étant situés sur l'élément externe.

5. Un palier pour roue ainsi revendiqué dans la revendication 4, dans lequel la bride (17) est située sur l'élément externe.

6. Un palier pour roue ainsi revendiqué dans l'une quelconque des revendications précédentes, dans lequel le palier est un palier de roulement conique à deux rangées.

7. Un palier pour roue ainsi revendiqué dans l'une quelconque des revendications 2 à 6, dans lequel l'un des épaulements est situé sur la bride (17).

8. Un palier pour roue ainsi revendiqué dans l'une quelconque des revendications 2 à 7, dans lequel les deux surfaces cylindriques (22,28) ont des diamètres différents.

9. Un palier pour roue ainsi revendiqué dans l'une quelconque des revendications précédentes, comprenant en outre une bague excitatrice montée sur l'un des emplacements de montage.
